# FASCICULE DE BREVET EUROPEEN

(11) **EP 2 781 397 B1**
(45) Date de publication et mention de la délivrance du brevet: **22.02.2017**
(21) Numéro de dépôt: 14160689.7
(22) Date de dépôt: 19.03.2014
(51) Int. Cl.: B60L 11/18, B62H 3/00

(54) **Système automatique de stockage de cycles et batterie pour un tel système**
Automatisches System zur Speicherung von Zyklen, und Batterie für ein solches System
Automatic cycle-storage system and battery for such a system

(30) Priorité: 21.03.2013 FR 1352528
(43) Date de publication de la demande: 24.09.2014
(73) Titulaire: JCDecaux SA, 92200 Neuilly-Sur-Seine (FR)
(72) Inventeur: Darras, Jacques, 78120 RAMBOUILLET (FR)
(74) Mandataire: Cabinet Plasseraud

(56) Documents cités:
- EP-A1- 1 925 541
- EP-A2- 0 985 596
- JP-A- 2006 035 911
- US-A1- 2012 143 401
- US-B1- 6 177 879

## Description

### DOMAINE DE L'INVENTION

La présente invention est relative aux systèmes automatiques de stockage de cycles et aux batteries pour de tels systèmes.

Plus particulièrement, l'invention concerne un système automatique de stockage de cycles comprenant :
- une pluralité de cycles électriques comportant chacun un moteur électrique et fonctionnant respectivement avec des batteries électriques rechargeables,
- une infrastructure fixe comportant une pluralité de postes de verrouillage sur lesquels peuvent se verrouiller lesdits cycles électriques et au moins un dispositif de commande externe adapté pour sélectivement autoriser le verrouillage et le déverrouillage des cycles électriques sur lesdits postes de verrouillage.

Un système de stockage de cycles tel que décrit ci-dessus peut être utilisé par exemple pour mettre des cycles en libre service à disposition du public, moyennant identification de l'emprunteur du cycle et éventuellement paiement d'une location.

### ARRIERE PLAN DE L'INVENTION

Le document EP-A-1 820 722 décrit un exemple d'un tel système de stockage de cycles en vue de leur location, dans lequel la batterie de chaque cycle est fixée à demeure au cycle et se recharge pendant que le cycle est verrouillé sur la structure d'accueil, ce qui présente l'inconvénient que ladite batterie n'est pas forcément bien rechargée lorsque l'utilisateur suivant emprunte le cycle.

Le document EP 0 985 596 décrit système automatique de stockage de cycles selon le préambule de la revendication 1.

### OBJETS DE L'INVENTION

La présente invention a notamment pour but de pallier cet inconvénient.

A cet effet, selon l'invention, un système automatique de stockage de cycles du genre en question est caractérisé en ce que les batteries sont amovibles et indépendantes des cycles électriques, chaque batterie comportant un connecteur électrique externe,
en ce que chaque cycle électrique comporte un connecteur électrique de cycle accessible à un utilisateur pour connecter le connecteur électrique externe d'une desdites batteries sur le cycle et alimenter le cycle électrique,
en ce que chaque batterie possède une unité logique adaptée pour déterminer au moins un paramètre de fonctionnement de la batterie,
et en ce que le système est adapté pour transmettre ledit au moins un paramètre de fonctionnement à l'infrastructure fixe, lorsque la batterie est connectée à un cycle électrique verrouillé sur un poste de verrouillage, l'infrastructure fixe ayant en mémoire des données de contact d'au moins certains utilisateurs et étant adaptée pour transmettre automatiquement par voie électronique à un utilisateur de ladite batterie, en fonction desdites données de contact, une information fonction dudit paramètre de fonctionnement de la batterie.

Cette transmission n'est pas forcément systématique, mais au contraire fonction de la valeur du paramètre de fonctionnement ; par exemple, le système n'envoie ladite information à l'utilisateur que si le paramètre de fonctionnement montre un besoin de maintenance ou de remplacement de la batterie. Par ailleurs, cette information peut être envoyée à seulement certains utilisateurs, par exemple des utilisateurs abonnés, ou ayant souscrit un abonnement spécial à cet effet.

Grâce à ces dispositions, chaque utilisateur peut utiliser sa propre batterie ou en tout cas une batterie dont il maîtrise la charge, ce qui lui permet d'utiliser un cycle avec une batterie bien chargée. De plus, on évite également, de cette façon, que la batterie ne reste au froid en hiver, ce qui permet d'allonger considérablement la durée de vie de ladite batterie. De plus, l'utilisateur reçoit une information sur le fonctionnement de la batterie, par exemple pour lui indiquer si une maintenance ou un remplacement est nécessaire, ce qui améliore le service offert à l'utilisateur.

Dans différents modes de réalisation du système automatique de stockage de cycles selon l'invention, on peut éventuellement avoir recours en outre à l'une et/ou à l'autre des dispositions suivantes (utilisables éventuellement indépendamment les unes des autres et indépendamment des dispositions précitées) :
- l'infrastructure fixe est adaptée pour transmettre à un utilisateur de ladite batterie, une information fonction dudit paramètre de fonctionnement de la batterie ;
- l'infrastructure fixe a en mémoire des données de contact d'au moins certains utilisateurs et est adaptée pour transmettre automatiquement ladite information par voie électronique, en fonction desdites données de contact ;
- lesdites données de contact comprennent au moins un numéro de téléphone et ladite information est envoyée par un message de texte radiotéléphonique ;
- lesdites données de contact comprennent au moins une adresse de messagerie et ladite information est envoyée par messagerie électronique ;
- la batterie possède un identifiant et le système comporte des moyens pour transmettre cet identifiant à l'infrastructure fixe avec ledit au moins un paramètre de fonctionnement, ladite infrastructure fixe ayant en mémoire des données relatives à l'utilisateur de la batterie, en correspondance avec ledit identifiant ;
- ladite infrastructure fixe est adaptée pour sélectivement déverrouiller ou non le cycle électrique en fonction dudit identifiant ;
- l'infrastructure fixe est adaptée pour identifier l'utilisateur du cycle avant toute libération du cycle, et ladite infrastructure fixe est adaptée pour transmettre ladite information à cet utilisateur ;
- l'unité logique de la batterie communique avec une unité centrale électronique appartenant au cycle lorsque ladite batterie est connectée au cycle, l'unité centrale électronique du cycle communiquant avec l'infrastructure fixe au moins lorsque le cycle est verrouillé sur un poste de verrouillage ;
- ledit au moins un paramètre de fonctionnement est représentatif d'une capacité de stockage d'énergie électrique de la batterie ;
- ledit au moins un paramètre de fonctionnement est choisi parmi une durée cumulée d'utilisation de la batterie, un nombre de cycles de décharge, au moins une profondeur de décharge, au moins un courant de décharge, une résistance interne.

Par ailleurs, l'invention a également pour objet une batterie amovible utilisable dans un système tel que décrit ci-dessus, comportant :
- un connecteur électrique externe,
- une unité logique adaptée pour déterminer au moins un paramètre de fonctionnement de la batterie et pour transmettre ledit au moins un paramètre de fonctionnement à une infrastructure fixe.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de stockage de cycles selon une forme de réalisation de l'invention,
- la figure 2 est un schéma bloc illustrant les composants électriques principaux du système de stockage de cycles de la figure 1,
- la figure 3 est une vue schématique en perspective d'une des batteries utilisables dans le système des figures 1 et 2, avec son chargeur,
- et la figure 4 est une vue schématique en perspective illustrant la batterie connectée au chargeur.

### DESCRIPTION PLUS DETAILLEE

Sur les différentes figures, les mêmes références désignent des éléments identiques ou similaires.

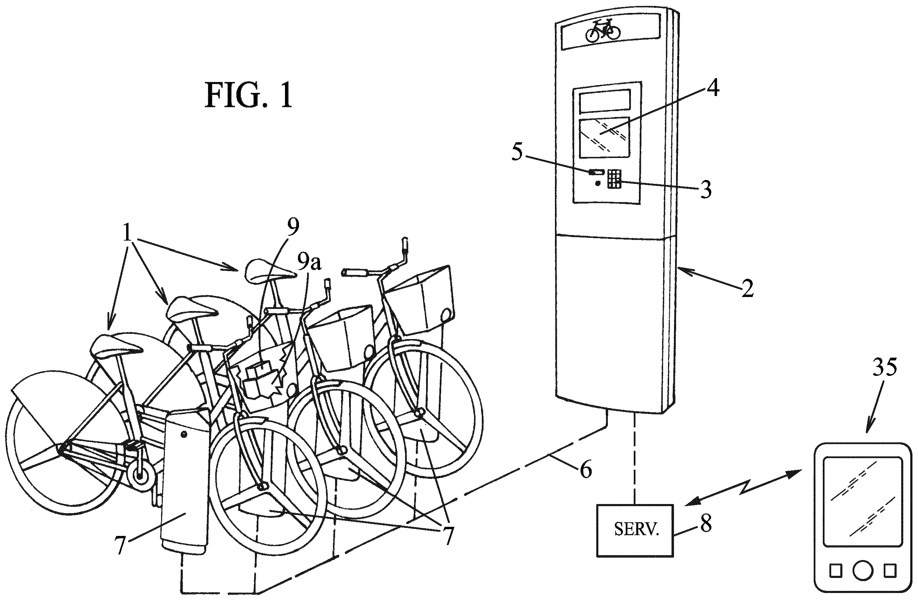

Comme représenté sur la figure 1, la présente invention concerne un système automatique de stockage de cycles 1 tels que notamment des bicyclettes, permettant par exemple de stocker des cycles sur la voie publique de façon à les mettre à la disposition du public, notamment par location.

Ce système automatique de stockage de cycles peut comporter plusieurs stations de stockage de cycles, dont une est représentée sur la figure 1. Ces stations de stockage de cycles peuvent par exemple être réparties en différents endroits d'une même ville. Chaque station de stockage de cycles comprend un poste central de station 2, qui se présente ici sous la forme d'une borne interactive dotée d'une interface utilisateur comprenant par exemple un clavier 3, un écran 4, éventuellement un lecteur de cartes portatives électroniques 5, un dispositif d'impression de tickets, etc. En variante, la borne interactive 2 pourrait ne pas comporter d'interface utilisateur et être une simple passerelle de communication entre la station de stockage de cycles et un serveur central 8 (SERV.).

La borne interactive 2 communique d'une part, avec le serveur central 8 qui gère les abonnements et les locations de cycles, et d'autre part, avec une pluralité de postes de verrouillage 7 qui permettent de verrouiller les cycles pendant leur stockage et qui peuvent par exemple se présenter sous la forme de bornes de verrouillage fixées au sol sur la voie publique et adaptées pour verrouiller chacune un cycle 1.

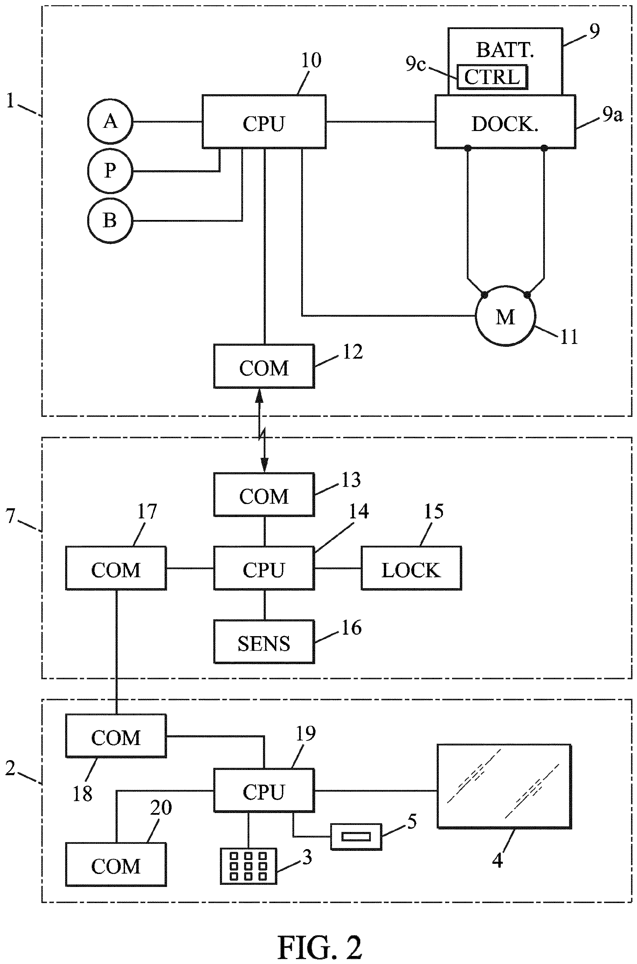

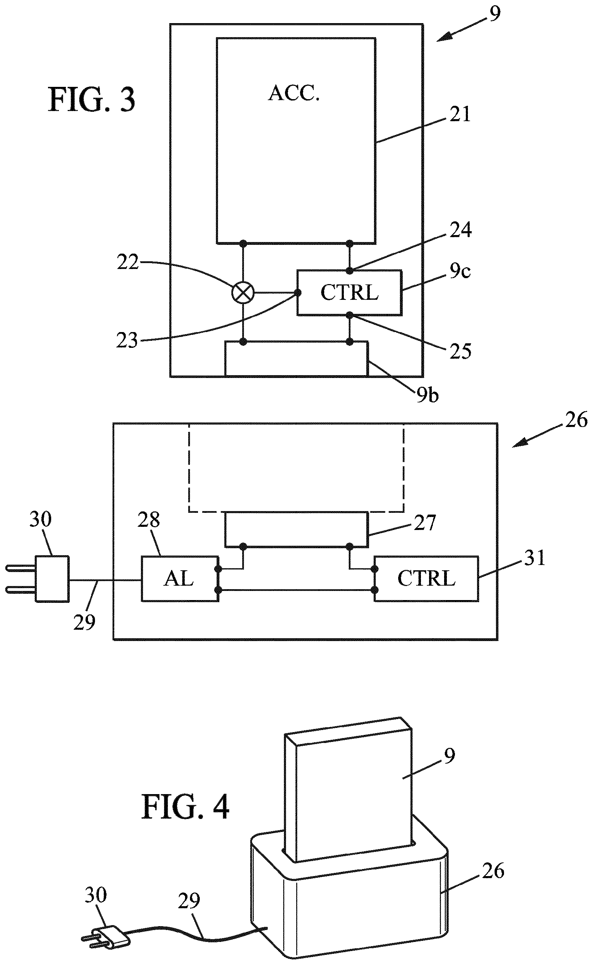

Le cycle 1 comporte classiquement un châssis composé d'un cadre porté par la roue arrière et d'une fourche surmontée du guidon et montée sur la roue avant. Comme représenté sur la figure 2, chaque cycle 1 peut être un cycle à assistance électrique comportant un connecteur 9a (DOCK.) sur lequel peut se connecter une batterie électrique 9 (BATT.) amovible et rechargeable qui comporte un connecteur électrique externe 9b (figure 3) complémentaire dudit connecteur 9a.

Le connecteur 9a est relié notamment à une unité centrale électronique 10 du cycle (CPU), par exemple un contrôleur, microprocesseur ou similaire. La batterie 9 peut éventuellement comporter une unité logique 9c (CTRL) telle qu'un microcontrôleur ou microprocesseur, qui peut éventuellement avoir en mémoire un identifiant unique lisible par l'unité centrale 10 par le biais du connecteur 9a ou autrement, et l'unité centrale 10 possède également une mémoire (ou peut accéder à une mémoire) dans laquelle elle peut stocker cet identifiant unique. Eventuellement, l'identifiant unique de la batterie, s'il est prévu, pourrait être mémorisé dans un circuit d'identification spécifique lisible par l'unité centrale 10, ou autre.

La batterie comporte en outre :
- un accumulateur électrique 21 relié au connecteur externe 9b par une liaison électrique,
- et un dispositif de commutation électronique 22 disposé sur cette liaison électrique et commandé par l'unité logique 9c en fonction d'informations de commande de batterie reçues par ladite unité logique de la batterie, pour sélectivement basculer entre un état de connexion et un état de déconnexion adaptés pour respectivement permettre et interdire au connecteur électrique externe 9b de ladite batterie de décharger de l'énergie électrique. Avantageusement, le dispositif de commutation électronique coupe la liaison électrique entre l'accumulateur 21 et le connecteur externe 9b dans l'état de déconnexion, de sorte qu'il interdit alors non seulement la décharge de la batterie, mais également sa recharge.

L'unité logique 9c peut comporter par exemple :
- une sortie 23 vers le dispositif de commutation 22,
- au moins une entrée 24 reliée à l'accumulateur 21 pour recevoir (mesurer) au moins un paramètre de fonctionnement électrique de la batterie, que ladite unité logique 9c peut mémoriser dans une mémoire interne ou externe (non représentée),
- au moins une entrée/sortie 25 reliée au connecteur 9b et permettant à l'unité logique 9c de la batterie de dialoguer avec l'unité centrale 10 du cycle par l'intermédiaire des connecteurs 9a, 9b.

Ledit au moins un paramètre de fonctionnement peut avantageusement être représentatif d'une capacité de stockage d'énergie électrique de la batterie 9 ; il peut s'agir notamment d'au moins un des paramètres suivants : durée cumulée d'utilisation de la batterie, nombre de cycles de décharge, profondeur de décharge, courant de décharge, résistance interne, ou toute information de tension ou de charge de l'accumulateur 21.

La batterie 9 alimente un moteur électrique 11 (M), par exemple un moteur d'assistance électrique au pédalage qui peut être commandé par l'unité centrale 10.

Le moteur électrique 11 est relié à une des roues du cycle, par exemple la roue avant, et il peut éventuellement être du type pouvant fonctionner soit en mode moteur pour entraîner cette roue, soit en mode générateur pour se faire entraîner par ladite roue et générer un courant électrique alimentant la batterie 9.

En temps normal, le fonctionnement du moteur 11 en mode moteur ou générateur est commandé par l'unité centrale 10, en fonction d'informations qu'elle reçoit de capteurs, notamment :
- un capteur de pédalage P adapté pour détecter ou mesurer la force de pédalage d'un utilisateur sur les pédales du cycle,
- éventuellement, un capteur de freinage adapté pour détecter un actionnement des freins du cycle par l'utilisateur,
- éventuellement un tachymètre (non représenté) mesurant la vitesse du cycle.

De plus, dans l'exemple considéré ici, l'unité centrale 10 peut également être reliée à un dispositif de commande d'antivol A, par exemple un simple bouton ou un dispositif à clef dont l'actionnement, pendant un arrêt temporaire du cycle, fait commander le moteur 11 par l'unité centrale 10 pour faire fonctionner le moteur 11 en mode générateur en l'absence de la batterie 9, ce qui rend quasiment impossible l'utilisation du cycle et donc est une dissuasion contre le vol du cycle.

L'unité centrale 10 peut également commander également au moins une interface de communication 12 (COM) qui est adaptée pour communiquer avec une interface de communication similaire 13 (COM) appartenant à chaque borne de verrouillage 7. Les interfaces de communication 12, 13 peuvent être de tout type connu et fonctionner par exemple en mode filaire, par induction, par ondes radio ou autres.

L'interface de communication 13 de la borne de verrouillage 7, quant à elle, communique avec une unité centrale électronique 14 (CPU) propre à la borne de verrouillage 7 (microprocesseur, microcontrôleur ou autre), laquelle unité centrale 14 commande par ailleurs un verrou électrique 15 (LOCK - un exemple d'un tel verrou est donné par exemple dans le document EP-A-1 820 722) adapté pour verrouiller un cycle sur la borne de verrouillage 7, et communique avec au moins un capteur 16 (SENS) adapté pour détecter le verrouillage d'un cycle sur la borne de verrouillage 7, et une interface de communication 17 (COM), par exemple un MODEM adapté pour communiquer par voie filaire 6 (figure 1) ou par une liaison radio courte portée ou tout autre manière, avec une interface de communication 18 similaire (COM) appartenant à la borne interactive 2 susmentionnée.

La borne interactive 2 comporte, quant à elle, également une unité centrale électronique 19 (CPU) telle qu'un microprocesseur, microcontrôleur ou autre, qui communique avec les périphériques 3-5 susmentionnés ainsi qu'avec une interface de communication 20 (COM) telle qu'un MODEM communiquant par radio ou par voie filaire avec le serveur central 8 susmentionné.

Dans ce système, chaque utilisateur possède de préférence sa propre batterie amovible 9, qu'il conserve avec lui notamment pour la recharger lorsqu'il ne s'en sert pas sur un cycle 1. Avantageusement, cette recharge peut s'effectuer au moyen d'un chargeur électrique 26 dédié tel que par exemple celui représenté sur les figures 3 et 4, comportant un connecteur 27 complémentaire du connecteur externe 9b de la batterie.

Le chargeur 26 peut par exemple comporter une unité centrale électronique 31 (CTRL) adaptée pour communiquer, par l'intermédiaire des connecteurs 9b, 27, avec l'unité logique 9c d'une batterie 9 connectée audit chargeur.

L'unité centrale électronique 31 du chargeur peut également commander le circuit d'alimentation électrique 28 du chargeur, qui peut se raccorder au réseau électrique par l'intermédiaire d'un câble externe 29 et d'une prise électrique 30.

L'unité logique 9c de la batterie peut être adaptée pour commander le dispositif de commutation 22 de la batterie en fonction d'informations de commande de batterie échangées entre ladite unité centrale 31 du chargeur et ladite unité logique 9c de la batterie.

Par exemple, l'unité logique 9c de la batterie 9 et l'unité centrale 31 du chargeur 26 peuvent comporter des codes identiques ou complémentaires permettant de valider que la batterie correspond au chargeur. Par exemple, l'identifiant de la batterie 9 peut être lu par l'unité centrale électronique 31 du chargeur, laquelle a en mémoire des données d'identification correspondant à cet identifiant, et l'unité centrale 31 du chargeur est adaptée pour envoyer à l'unité logique 9c de la batterie des informations de commande de batterie permettant de faire basculer le dispositif de commutation 22 à l'état de connexion, lorsque l'identifiant lu par l'unité centrale 21 du chargeur correspond auxdites informations d'identification.

Si cette correspondance est validée, l'unité logique 9c de la batterie fait passer le dispositif de commutation à l'état de connexion, et le chargeur 26 alimente la batterie 9 par le connecteur externe de ladite batterie. Inversement, si cette correspondance n'est pas validée, l'unité logique 9c de la batterie fait passer ou maintient le dispositif de commutation 22 à l'état de déconnexion, de sorte que le dispositif de commutation empêche la recharge de la batterie. On peut empêcher ainsi la recharge de batteries volées, si le voleur n'a pas pu voler un chargeur compatible avec cette batterie.

Le dispositif qui vient d'être décrit fonctionne comme suit.

Lorsqu'un utilisateur souhaite emprunter un cycle 1 sur la station de stockage de cycles, il peut s'identifier par exemple sur la borne interactive 2 au moyen d'une carte lue par le lecteur de cartes 5 de la borne interactive ou en tapant un code personnel sur le clavier 3 ou par tout autre moyen connu, après quoi la borne interactive vérifie par exemple avec le serveur 8 de gestion de location, que l'utilisateur a le droit de louer un cycle.

En variante, chaque poste de verrouillage 7 peut comporter un lecteur de carte, par exemple un lecteur de carte sans contact, sur lequel les utilisateurs abonnés peuvent faire lire une carte sans contact pour s'identifier, après quoi le poste de verrouillage en question communique avec la borne interactive 2 qui demande l'autorisation du serveur comme indiqué ci-dessus.

Selon une autre variante particulièrement avantageuse, un utilisateur abonné peut s'identifier au moyen de sa batterie amovible 9, qui lui est personnelle comme indiqué ci-dessus et dont l'identifiant est mémorisé par le serveur avec les autres données de l'abonné, dans une base de données des abonnés. Dans ce cas, il suffit à l'utilisateur, lorsqu'il arrive à la station de stockage de cycles, de connecter sa batterie personnelle 9 sur le connecteur 9a du cycle souhaité. L'unité logique 9c de la batterie communique alors son identifiant à l'unité centrale 10 du cycle, qui elle-même communique avec l'unité centrale 19 de la borne interactive 2 par l'intermédiaire de l'unité centrale 14 de la borne de verrouillage 7 sur laquelle est verrouillé le cycle. Comme expliqué précédemment, la borne interactive 2 demande alors au serveur 8 l'autorisation de libérer le cycle 1.

Dans tous les cas évoqués ci-dessus, lorsqu'il reçoit une requête de libération d'un cycle, le serveur 8 vérifie si l'utilisateur est en droit de louer un cycle et si la batterie 9 n'est pas dans une liste de batteries volées. Si la situation est normale, le serveur donne à la borne interactive 2 l'autorisation de libérer le cycle 1 et note l'heure de début de location. La borne interactive 2 commande alors la libération d'un cycle 1 de sa borne de verrouillage 7, de façon que l'utilisateur puisse le prendre et l'utiliser.

A l'inverse, si le serveur détecte que l'identifiant de la batterie 9 correspond à une batterie volée lorsqu'il reçoit une requête de libération de cycle subséquente à la connexion de la batterie 9 sur le cycle, il envoie à la borne interactive 2 un ordre de blocage de batterie, ordre qui est relayé par ladite borne interactive puis par l'unité centrale du cycle vers l'unité logique 9c de la batterie 9. L'unité centrale 9c de la batterie fait alors basculer le dispositif de commutation en état de déconnexion et le maintient définitivement ans cet état, sauf à recevoir un ordre de déblocage venant du serveur ou d'un service de maintenance des batteries. On peut ainsi neutraliser les batteries volées, ce qui est une dissuasion supplémentaire contre le vol. On notera que ce processus de blocage e batterie peut être utilisé même si l'identifiant de la batterie n'est pas utilisé pour libérer le cycle : par exemple, dans ce cas, il peut être demandé à l'utilisateur de connecter sa batterie 9 sur le cycle 1 avant de libérer le cycle, faute de quoi le cycle n'est pas libéré.

Lorsque l'utilisateur connecte sa batterie 9 sur le connecteur 9a du cycle, son dispositif de commutation est initialement à l'état de déconnexion, et l'unité logique 9c de la batterie détecte la connexion de la batterie soit directement, soit indirectement par le fait que l'unité logique 9c commence à dialoguer avec l'unité centrale 10 du cycle. Lorsque l'unité logique 9c détecte cette connexion et sous réserve qu'elle n'ait pas reçu un ordre de blocage tel qu'expliqué ci-dessus, l'unité logique 9c commande le dispositif de commutation 22 de façon à le faire basculer en état de connexion. Plus généralement, cette commande de basculement en mode de connexion du dispositif de commutation 22 peut être effectuée en fonction de toute information de commande reçue par l'unité logique 9c (détection directe de connexion de la batterie, dialogue avec l'unité centrale du cycle, ou autre).

Eventuellement, ce passage en mode de connexion peut être subordonné à la réception d'un ordre reçu de l'unité centrale 10 du cycle. Par exemple, l'unité centrale du cycle peut d'abord lire l'identifiant de la batterie, vérifier que c'est un identifiant valide puis donner l'ordre de basculement en mode de connexion.

Si le cycle 1 a été libéré par la borne de verrouillage 7, l'utilisateur peut librement l'utiliser. Lorsqu'il a terminé de l'utiliser il rend le cycle sur une station de stockage de cycle (celle où il a emprunté le cycle ou une autre) en engageant le cycle 1 sur une borne de verrouillage libre 7 de cette station. La borne interactive 2 de cette station informe alors le serveur 8 que le cycle 1 a été rendu, puis si serveur confirme que la situation est en ordre, fait verrouiller le cycle 1 sur la borne de verrouillage 7. L'utilisateur reprend alors sa batterie 9.

Lorsque l'utilisateur déconnecte sa batterie 9 du connecteur 9a du cycle (en fin d'utilisation ou même lors d'un arrêt temporaire du cycle), l'unité logique 9c de la batterie détecte cette déconnexion comme expliqué ci-dessus et commande alors le dispositif de commutation 22 de façon à le faire basculer en état de déconnexion. La batterie ne peut alors pas se décharger intempestivement, même si son connecteur externe 9 vient en contact avec un milieu conducteur. Cet avantage vaut également si le connecteur externe est protégé en tout ou partie par un volet ou bouchon ou autre lorsqu'il est déconnecté.

Par ailleurs, le système est adapté pour transmettre le ou les paramètre(s) de fonctionnement susmentionné de la batterie 9 à l'infrastructure fixe, lorsque la batterie est connectée à un cycle électrique 1 verrouillé sur un poste de verrouillage 7, par exemple avant la libération du cycle et/ou lorsque le cycle 1 est rendu par l'utilisateur. Cette transmission peut se faire par exemple en même temps que la transmission de l'identifiant de la batterie 9. Par exemple l'unité logique 9c de la batterie communique ces données à l'unité centrale électronique 10 du cycle sur lequel est connectée la batterie, et l'unité centrale électronique 10 du cycle communique à son tour lesdites données à l'infrastructure fixe, par exemple au poste de verrouillage 7 sur lequel il est verrouillé, lequel transmet à la borne interactive 2 qui retransmet au serveur de gestion 8.

Le serveur de gestion 8, ou toute autre partie de l'infrastructure fixe, peut alors transmettre à l'utilisateur de la batterie 9, une information fonction dudit paramètre de fonctionnement de la batterie. Cette information peut par exemple être une information sur l'utilisation de la batterie, un conseil d'utilisation, une information relative à la maintenance ou au remplacement de la batterie, ou autre. Pour ce faire, le serveur 8 (ou toute autre partie de l'infrastructure fixe), peut avantageusement avoir en mémoire des données de contact d'au moins certains utilisateurs et être adapté pour transmettre automatiquement ladite information relative à la batterie par voie électronique, en fonction desdites données de contact. Ces données de contact peuvent comprendre au moins un numéro de téléphone et ladite information peut être envoyée par un message de texte radiotéléphonique (SMS, MMS ou similaire) vers le téléphone mobile 35 de l'utilisateur (figure 1), ou encore lesdites données de contact comprennent au moins une adresse de messagerie et ladite information est envoyée par messagerie électronique (email, messagerie instantanée, etc.), accessible éventuellement par le téléphone mobile 35 ou par un ordinateur.

L'utilisateur à qui doit être envoyé l'information relative à la batterie, peut être déterminé par le serveur 8 en fonction de l'identifiant de la batterie 9, le serveur 8 ayant en mémoire des données relatives à l'utilisateur de la batterie, en correspondance avec ledit identifiant.

Alternativement, le serveur 8 pourrait utiliser uniquement les données d'identification ayant permis à l'utilisateur de s'identifier en vue d'emprunter un cycle (carte électronique, code personnel ou autre), autres que l'identifiant de la batterie, notamment dans le cas où la batterie 9 ne possède pas d'identifiant ou encore si l'identifiant de la batterie n'est pas relié à un utilisateur dans la base de données du serveur 8. Dans ce cas, le serveur transmet ladite information relative à la batterie à l'utilisateur correspondant auxdites données d'identification (carte électronique, code personnel ou autre).

## Revendications

1. Système automatique de stockage de cycles comprenant :
- une pluralité de cycles électriques (1) comportant chacun un moteur électrique (11) et fonctionnant respectivement avec des batteries électriques (9) rechargeables,
- une infrastructure fixe comportant une pluralité de postes de verrouillage (7) sur lesquels peuvent se verrouiller lesdits cycles électriques (1) et au moins un dispositif de commande externe (2, 8) adapté pour sélectivement autoriser le verrouillage et le déverrouillage des cycles électriques sur lesdits postes de verrouillage,
les batteries (9) sont amovibles et indépendantes des cycles électriques, chaque batterie comportant un connecteur électrique externe (9b), et chaque cycle électrique (1) comporte un connecteur électrique de cycle (9a) accessible à un utilisateur pour connecter le connecteur électrique externe (9b) d'une desdites batteries (9) sur le cycle électrique et alimenter le cycle, et chaque batterie (9) possède une unité logique (9c) adaptée pour déterminer au moins un paramètre de fonctionnement de la batterie, **caractérisé en ce que** le système est adapté pour transmettre ledit au moins un paramètre de fonctionnement à l'infrastructure fixe (2, 7, 8), lorsque la batterie est connectée à un cycle électrique (1) verrouillé sur un poste de verrouillage (7), l'infrastructure fixe (2, 7, 8) ayant en mémoire des données de contact d'au moins certains utilisateurs et étant adaptée pour transmettre automatiquement par voie électronique à un utilisateur de ladite batterie, en fonction desdites données de contact, une information fonction dudit paramètre de fonctionnement de la batterie.

2. Système selon la revendication 1, dans lequel lesdites données de contact comprennent au moins un numéro de téléphone et ladite information est envoyée par un message de texte radiotéléphonique.

3. Système selon la revendication 2, dans lequel lesdites données de contact comprennent au moins une adresse de messagerie et ladite information est envoyée par messagerie électronique.

4. Système selon l'une quelconque des revendications précédentes, dans lequel la batterie (9) possède un identifiant et le système comporte des moyens pour transmettre cet identifiant à l'infrastructure fixe (2, 7, 8) avec ledit au moins un paramètre de fonctionnement, ladite infrastructure fixe ayant en mémoire des données relatives à l'utilisateur de la batterie, en correspondance avec ledit identifiant.

5. Système selon la revendication 4, dans lequel ladite infrastructure fixe (2, 7, 8) est adaptée pour sélectivement déverrouiller ou non le cycle électrique (1) en fonction dudit identifiant.

6. Système selon l'une quelconque des revendications 2 à 5, dans lequel l'infrastructure fixe (2, 7, 8) est adaptée pour identifier l'utilisateur du cycle (1) avant toute libération du cycle, et ladite infrastructure fixe est adaptée pour transmettre ladite information à cet utilisateur.

7. Système selon l'une quelconque des revendications précédentes, dans lequel l'unité logique (9c) de la batterie communique avec une unité centrale électronique (10) appartenant au cycle lorsque ladite batterie (9) est connectée au cycle, l'unité centrale électronique (10) du cycle communiquant avec l'infrastructure fixe au moins lorsque le cycle est verrouillé sur un poste de verrouillage (7).

8. Système selon l'une quelconque des revendications précédentes, dans lequel ledit au moins un paramètre de fonctionnement est représentatif d'une capacité de stockage d'énergie électrique de la batterie (9).

9. Système selon l'une quelconque des revendications précédentes, dans lequel ledit au moins un paramètre de fonctionnement est choisi parmi une durée cumulée d'utilisation de la batterie, un nombre de cycles de décharge, au moins une profondeur de décharge, au moins un courant de décharge, une résistance interne.

## Patentansprüche

1. Automatisches System zum Abstellen von Fahrrädern, aufweisend:
- mehrere Elektrofahrräder (1), die jeweils einen Elektromotor (11) aufweisen und jeweils mit wiederaufladbaren elektrischen Batterien (9) betrieben werden,
- eine ortsfeste Infrastruktur, die mehrere Verriegelungsplätze (7), an welchen die Elektrofahrräder (1) verriegelt werden können, und mindestens eine externe Steuervorrichtung (2, 8) aufweist, die angepasst ist, ein selektives Verriegeln und Entriegeln der Elektrofahrräder an den Verriegelungsstationen zu erlauben,
wobei die Batterien (9) von den Elektrofahrrädern abnehmbar und unabhängig sind, wobei jede Batterie einen externen elektrischen Verbinder (9b) aufweist und jedes Elektrofahrrad (1) einen für einen Benutzer zugänglichen elektrischen Fahrradverbinder (9a) aufweist, um den externen elektrischen Verbinder (9b) einer der Batterien (9) mit dem Elektrofahrrad zu verbinden und das Fahrrad energetisch zu versorgen, und jede Batterie (9) eine Logikeinheit (9c) aufweist, die angepasst ist, mindestens einen Betriebsparameter der Batterie zu bestimmen,
**dadurch gekennzeichnet, dass** das System angepasst ist, den mindestens einen Betriebsparameter zu der ortsfesten Infrastruktur (2, 7, 8) zu senden, wenn die Batterie mit einem Elektrofahrrad, das an einer Verriegelungsstation (7) verriegelt ist, verbunden ist, wobei die ortsfeste Infrastruktur (2, 7, 8) einen Datenspeicher für Kontaktdaten mindestens einiger Benutzer aufweist und angepasst ist, entsprechend den Kontaktdaten eine Information, die sich auf den Betriebsparameter der Batterie bezieht, automatisch auf elektronischem Wege zu einem Benutzer der Batterie zu senden.

2. System nach Anspruch 1, in welchem die Kontaktdaten mindestens eine Telefonnummer aufweisen und die Information mittels einer mobiltelefonischen Textnachricht verschickt wird.

3. System nach Anspruch 2, in welchem die Kontaktdaten mindestens eine Email-Adresse aufweisen und die Information mittels elektronischer Post verschickt wird.

4. System nach einem der vorstehenden Ansprüche, in welchem die Batterie (9) Identifikationsdaten aufweist und das System Einrichtungen aufweist, um diese Identifikationsdaten zusammen mit dem mindestens einen Betriebsparameter zu der ortsfesten Infrastruktur (2, 7, 8) zu senden, wobei die ortsfeste Infrastruktur, entsprechend zu den Identifikationsdaten, Daten gespeichert hat, die sich auf den Benutzer der Batterie beziehen.

5. System nach Anspruch 4, in welchem die ortsfeste Infrastruktur (2, 7, 8) angepasst ist, abhängig von den Identifikationsdaten das Elektrofahrrad (1) selektiv zu entriegeln oder nicht zu entriegeln.

6. System nach einem der Ansprüche 2 bis 5, in welchem die ortsfeste Infrastruktur (2, 7, 8) angepasst ist, vor jeder Freigabe des Fahrrads den Benutzer des Fahrrads (1) zu identifizieren, und die ortsfeste Infrastruktur angepasst ist, die Information zu diesem Benutzer zu senden.

7. System nach einem der vorstehenden Ansprüche, in welchem die Logikeinheit (9c) der Batterie mit einem dem Fahrrad zugehörigen elektronischen Prozessor (10) kommuniziert, wenn die Batterie (9) mit dem Fahrrad verbunden ist, wobei der elektronische Prozessor (10) des Fahrrads mit der ortsfesten Infrastruktur kommuniziert, zumindest wenn das Fahrrad an einem Verrieglungsplatz (7) verriegelt ist.

8. System nach einem der vorstehenden Ansprüche, in welchem der mindestens eine Betriebsparameter eine elektrische Energiespeicherkapazität der Batterie (9) repräsentiert.

9. System nach einem der vorstehenden Ansprüche, in welchem der mindestens eine Betriebsparameter unter den folgenden Parametern ausgewählt ist: einer kumulierten Nutzungsdauer der Batterie, einer Anzahl von Entladungszyklen, mindestens einer Entladungstiefe, mindestens einem Entladungsstrom, einem Innenwiderstand.

## Claims

1. An automatic system for cycle storing comprising:
- a plurality of electric cycles (1) each including an electric motor (11) and operating with rechargeable electric batteries (9) respectively,
- a fixed infrastructure including a plurality of locking stations (7) on which the following may lock: said electric cycles (1) and at least one external control device (2, 8) adapted for selectively authorising locking and unlocking the electric cycles on said locking stations,
- the batteries (9) are detachable and independent from the electric cycles, each battery including an external electric connector (9b),
- each electric cycle of (1) includes an electric cycle connector (9a) accessible from a user to connect the external electric connector (9b) from one of said batteries (9) on the electric cycle and supply the cycle,
- each battery (9) has a logical unit (9c) adapted for determining at least one battery operation parameter,
- **characterised in that** the system is adapted for transmitting said at least one operation parameter to the fixed infrastructure (2, 7, and 8), when the battery is connected to an electric cycle (1) locked on air locking station (7), the fixed infrastructure (2, 7, 8) having memorised contact data for at least some users and being adapted for automatically transmitting by electric medium through a user of said battery, based on said contact data, information based on said operation parameter of the battery.

2. System according to Claim 1, wherein said contact data comprises at least one telephone number and said information is sent through a radiotelephonic text message.

3. System according to Claim 2, wherein said contact data comprises at least one email address and said information is sent through electronic mail.

4. System according to any of the previous claims, wherein the battery (9) has an identifier and the system includes means for transmitting these identifiers to the fixed infrastructure (2, 7, 8) with said at least one operation parameter, said fixed infrastructure having memorised data relative to the user of the battery, corresponding with said identifier.

5. System according to Claim 4, wherein said fixed infrastructure (2, 7, 8) adapted for selectively unlocking or not the electric cycle (1) based on said identifier.

6. System according to any of Claims 2 to 5, wherein the fixed infrastructure (2, 7, 8) is adapted for identifying the user of the cycle (1) before any cycle release, and said fixed infrastructure is adapted for transmitting said information to this user.

7. System according to any of the previous claims, wherein the logical unit (9c) of the battery communicates with an electronic central unit (10) belonging to the cycle when said battery (9) is connected to the cycle, the electronic central unit (10) of the cycle communicating with the fixed infrastructure at least when the cycle is locked on a locking station (7).

8. System according to any of the previous claims, wherein said at least one operation parameter is representative of a capacity for storing electric energy for the battery (9).

9. System according to any of the previous claims, wherein said at least one operation parameter is chosen from a cumulative time of use of the battery, a number of discharge cycles, at least one discharge depth, at least one discharge current, an internal resistance.
